# EUROPEAN PATENT SPECIFICATION

(11) **EP 2 424 057 B1**
(45) Date of publication and mention of the grant of the patent: **03.04.2013**
(21) Application number: 11175524.5
(22) Date of filing: 27.07.2011
(51) Int. Cl.: H02G 3/08, A21C 15/00, H02G 3/06, H02G 15/013

(54) **An electrical conduit system and sealing device therefor**
Elektrisches Leitungssystem und Dichtungsvorrichtung dafür
Système de conduite électrique et dispositif d'obturation correspondant

(30) Priority: 31.08.2010 GB 201014425
(43) Date of publication of application: 29.02.2012
(73) Proprietor: Electrix International Limited, Bishop Auckland, County Durham DL14 6XP (GB)
(72) Inventor: Thomson, Christopher, Durham, Durham DH1 4FH (GB)
(74) Representative: Archer, Graham John

(56) References cited:
- NL-A- 7 012 092
- US-A- 1 351 724

## Description

The present invention relates to an electrical conduit system and to a sealing device therefor and relates particularly, but not exclusively, to a stainless steel conduit system for use in areas where hygiene is of paramount importance.

An electrical conduit system is disclosed in US-A-1351724.

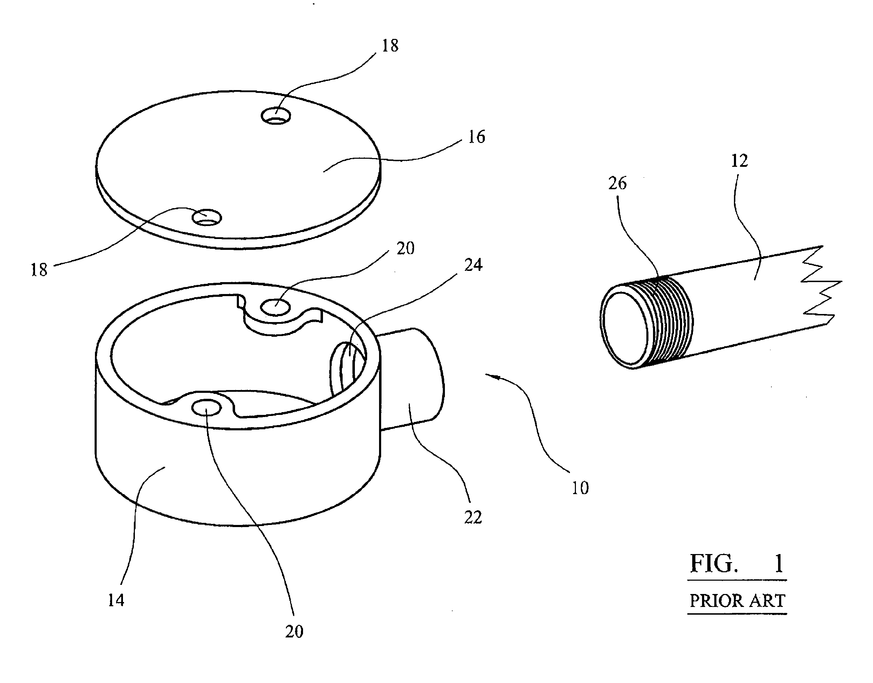

The use of electrical conduit systems is well known and an example of part of another system of the prior art is shown in Figure 1. In this example, a conduit system 10 includes a section of conduit 12, with just one end shown in the figure, and a junction 14 for connecting the section of conduit to another part of the conduit system. In the example shown, the junction 14 is a termination box with no connection to another part of the conduit system. However, more commonly a junction would be designed to connect to further sections of conduit. Junction 14 has a lid 16 which attaches to the junction 14 via screws not shown that extend through apertures 18 into receiving apertures 20 in junction 14. The lid is sealed, relative to the junction, by a sealing ring (not shown). Junction 14 also has a conduit receiving portion 22 that has an internal threaded surface 24 that engages the externally threaded end surface 26 of conduit section 12.

In use conduit section 12 is attached to junction 14 by engaging threaded surfaces 24 and 26. When a cable is passed through conduit system 10 an earthing connection is made in some of the junctions 14 by electrically connecting a portion of earth cable to an earth connector (not shown) that is formed as part of junction 14. In order to maintain a good earth circuit throughout the entire conduit system 10, it is essential that a good metal to metal contact is present between each conduit section and junction. This is easily achieved between the two threaded portions 24 and 26 and, in the UK, the Institute of Electrical Engineers has set out standards for the lengths of the threads of threaded surfaces 24 and 26 that ensure a good earth circuit is maintained.

In some installations, for example in the food and pharmaceutical industries, it is necessary to maintain very high standards of hygiene requiring that the conduit systems are easily cleaned. As a result, conduit systems can be made from stainless steel. In some such situations it is necessary for the conduit system to be waterproof in order that water can be sprayed on to the conduit system as part of the cleaning process.

To create a waterproof seal between a section of conduit 12 and a junction 14, it is common practice to use a small quantity of sealant or plumber's PTFE tape to ensure that water cannot access the inside of the conduit system. However, sealant, and in particular PTFE tape, is electrically insulating and can create a high electrical resistance between the conduit section and junction. Applying a sealant to an external portion of the join between the junction and the conduit system is unacceptable as it creates dirt traps and the use of stainless steel makes adhesion of the sealant to the conduit system more difficult.

It is often necessary for installation engineers to cut a section of conduit to length and use a threading dye to create a new thread on the section of conduit that has been cut. This can exacerbate the problem of sealing between the conduit section and junction, in particular when the cutting dye becomes worn, the tolerance of the thread that is cut on the conduit section is not as good as if it had been formed in the controlled environment of an engineering factory.

A potential solution to this problem would be to use a cable gland to form a join between the conduit section 12 and the junction 14. A cable gland is designed to create a seal between a cable and a device such as junction 14 where the outer sheath of the cable is exposed until it enters the junction 14. The cable gland must provide good grip on the cable and must seal it, preventing water and/or gas ingress into the junction. Such a cable gland could be used to hold the conduit section and provide an excellent seal between the conduit section and the junction. However, the cable gland suspends the cable away from the metal surfaces of the cable gland and the junction using a rubber seal and therefore would completely insulate the conduit section from the junction. This would therefore completely break the earth circuit and prove entirely unsuitable. Furthermore, the large number of components in the glad creates hard to clean dirt traps making the cleaning process more difficult.

Preferred embodiments of the present invention seek to overcome the above described disadvantages of the prior art.

According to the present invention, there is provided a conduit system comprising:-
at least one section of conduit having at least one cylindrical tubular portion including an end portion having at least one first threaded portion;
at least one junction for connecting at least one said section of conduit to another part of the conduit system, the junction having a hollow body and at least one conduit receiving portion located outside said hollow body and having at least one second threaded portion for engaging the first threaded portion; and
sealing means for sealing the join between the conduit and the junction, the sealing means comprising:
   an abutment member having a third threaded portion for engaging the first threaded portion,
   at least one compressible seal for sealing the conduit relative to the junction,
   characterised in that a first surface of the abutment member and an end surface of the conduit receiving portion of the junction are adapted to engage opposing sides of the compressible seal and apply pressure to the compressible seal thereby sealing the conduit relative to the junction.

By providing sealing means including an abutment member and a compressible seal that is compressed between the abutment member and the end surface of the conduit receiving portion, the advantage is provided that a seal between the conduit section and the junction without altering the electrical resistance between the junction and the conduit section. A highly water resistant seal is provided without altering the existing conduit sections and junction components and as a result, this seal can be retrofitted to an existing conduit system. Furthermore, the abutment member and compressible seal are small components and do not add significant cost to the total cost of the conduit system and are sufficiently small components that they do not significantly increase the overall size of the system nor extend beyond the largest dimensions of the conduit system. This small increase in size is accompanied by only a small increase in the number of externally visible junctions between components therefore not significantly increasing the potential dirt traps. It is also the case that the abutment member and compressible seal are located externally and therefore do not interfere with the inside dimensions of the conduit system thereby not interfering with, for example, the movement of the cables through the conduit system when cables are being added.

In a preferred embodiment the abutment portion further comprises a second surface perpendicular to the first surface and adapted to engage the compressible seal when it is under compression thereby limiting it from moving in a radially outwards direction.

By preventing outward radial movement of the compressible seal the advantage is provided that under compression the seal must move inwardly thereby creating a better seal.

In another preferred embodiment the abutment member further comprises a recess in said first surface adapted to receive said compressible seal.

By including a recess in the first surface of the abutment member the advantage is provided that the compressible seal is readily located in the recess thereby controlling its position. This also allows the seal to be kept in permanent engagement with the abutment member so that the seal and abutment member form a single item that can be easily added to the conduit system.

In a further preferred embodiment the compressible seal comprises an O-ring.

According to another aspect of the present invention, there is provided a sealing device for sealing the join between a conduit section and a junction in a conduit system, the sealing means comprising:-
an abutment member having a threaded portion for engaging a threaded portion on an end of conduit section; and
at least one compressible seal for sealing the conduit relative to the junction,
wherein a first surface of the abutment member and an end of a conduit receiving portion of the junction are adapted to engage opposing sides of the compressible seal and apply pressure to the compressible seal thereby sealing the conduit relative to the junction.

In a preferred embodiment the abutment portion further comprises a second surface perpendicular to the first surface and adapted to engage the compressible seal when it is under compression thereby limiting it from moving in a radially outwards direction.

In another preferred embodiment the abutment portion further comprises a recess in said first surface adapted to receive said compressible seal.

In a further preferred embodiment the compressible seal comprises an O-ring.

According to a further aspect of the present invention there is provided a conduit system comprising:-
at least one section of conduit having at least one cylindrical tubular portion including an end having at least one first threaded portion;
at least one junction for connecting at least one said section of conduit to another part of the conduit system, the junction having a hollow body defining a volume and at least one conduit receiving portion having at least one second threaded portion for engaging the first threaded portion, the junction further comprises an abutment portion formed as part of said conduit receiving portion; and
at least one compressible seal for sealing the conduit relative to the junction,
wherein the abutment portion of the junction and the end of the first threaded portion are adapted to engage opposing sides of the compressible seal and apply pressure to the compressible seal thereby sealing the conduit relative to the junction.

By providing an abutment portion and a compressible seal that is compressed between the abutment portion and the end surface of the conduit section, the advantage is provided that a seal between the conduit section and the junction without altering the electrical resistance between the junction and the conduit section. A highly water resistant seal is provided without altering the external dimension and therefore the overall size of the conduit system. Furthermore, because the seal is provided within the junction the advantage is provided that the external appearance of the conduit system is unchanged from that of the prior art. This also means that there is no increase in the number of externally visible junctions between components meaning that there is no increase in the number of potential dirt traps compared to the prior art.

In a preferred embodiment the compressible seal comprises an O-ring.

In another preferred embodiment one or both of the abutment portion and the end of the first threaded portion are angled to encourage radially outward movement of the compressible seal.

According to another aspect of the present invention there is provided a junction for use in a conduit system for connecting at least one said section of conduit to another part of the conduit system, the junction comprising:- a hollow body defining a volume and at least one conduit receiving portion having at least one threaded portion for engaging a threaded portion of a section of conduit, the junction further comprises an abutment portion formed as part of said conduit receiving portion for engaging at least one compressible seal, wherein the abutment portion and an end of said threaded portion of said conduit section are adapted to engage opposing sides of the compressible seal and apply pressure to the compressible seal thereby sealing the conduit relative to the junction.

In a preferred embodiment the abutment portion is angled to encourage radially outward movement of the compressible seal.

Preferred embodiments of the present invention will now be described, by way of example only, and not in any limitative sense, with reference to the accompanying drawings in which:
Figure 1 is a perspective view of a part of a conduit system of the prior art;
Figure 2 is a perspective view of a part of a conduit system of a first aspect of the present invention;
Figure 2a is a schematic sectional view of the conduit system of Figure 2;
Figure 3 is a plan view of a part of a conduit system of a second aspect of the present invention with a partial sectional view.

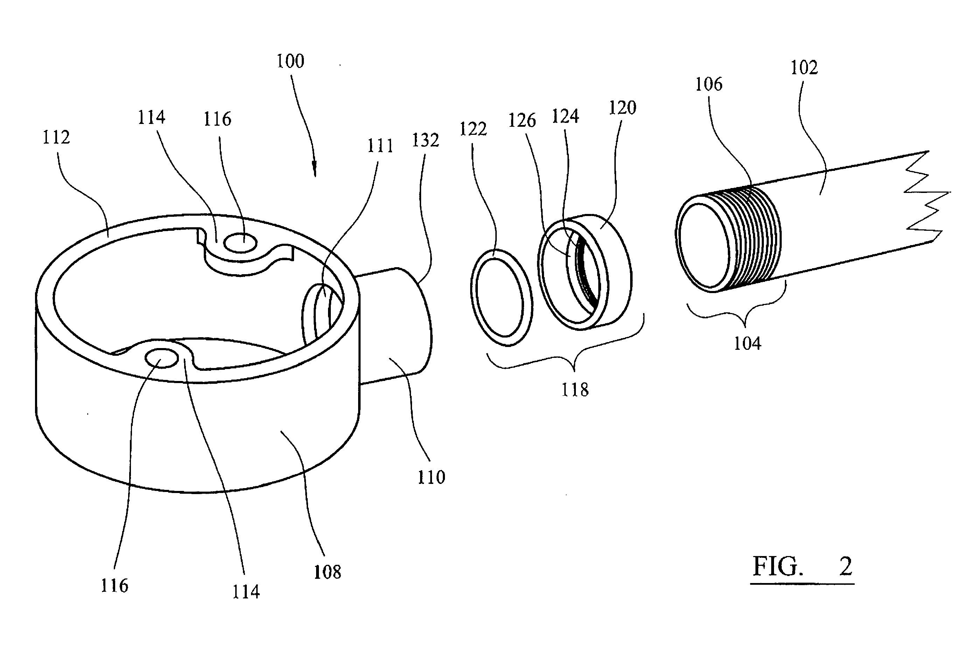

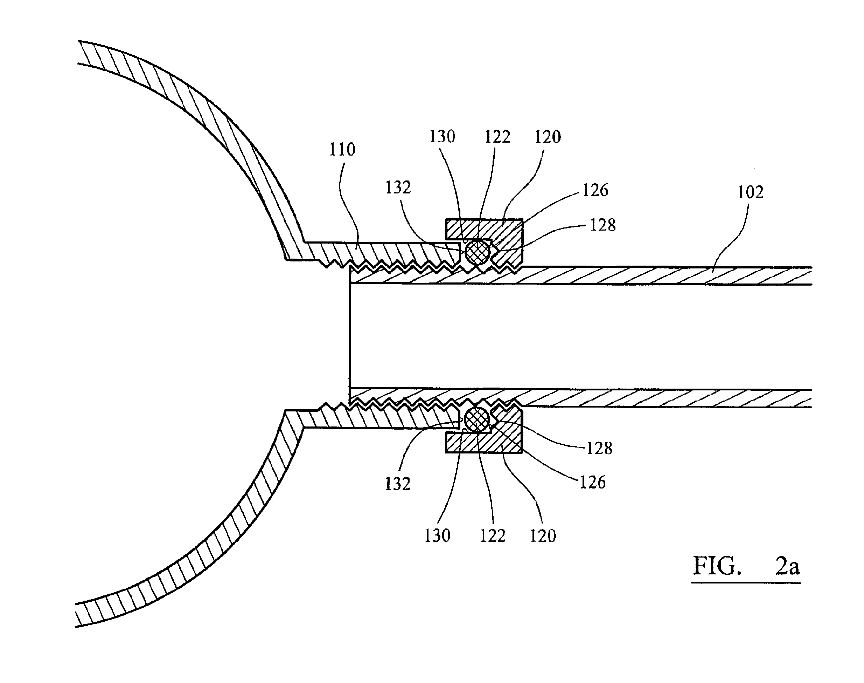

Referring to Figures 2 and 2a, a conduit system 100 includes a conduit section 102 that is cylindrical and tubular and includes an end portion 104 that has an external thread 106.

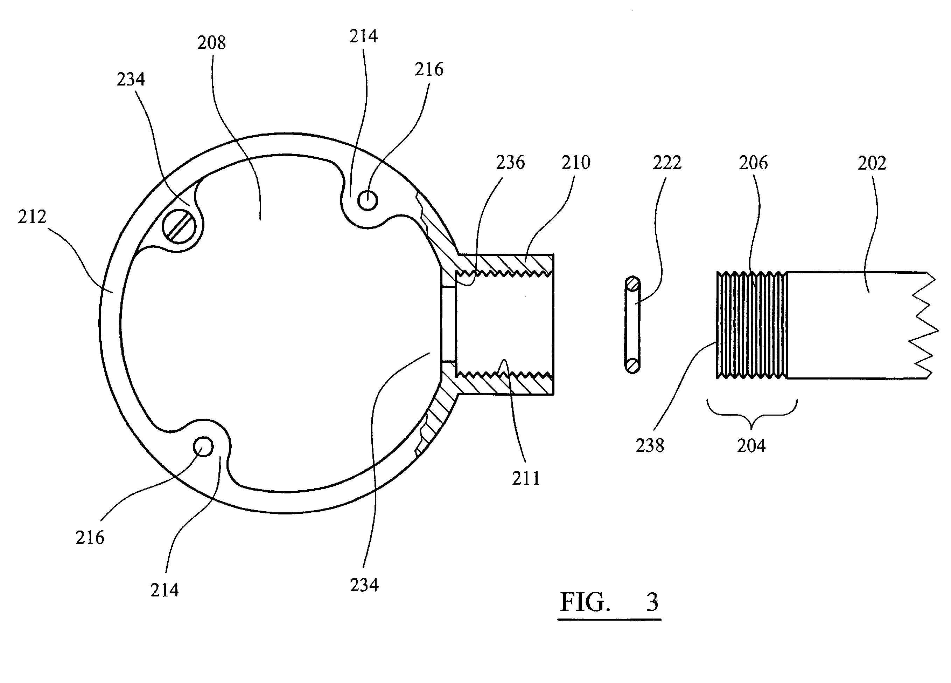

The conduit system 100 also includes a junction 108 that connects a section of conduit to another part of the conduit system. The junction 108 has a hollow body and at least one receiving portion 110. The receiving portion 110 is tubular with its open volume extending into a hollow space in the body of the junction 108 thereby allowing cables to pass from a conduit section into the junction 108 and beyond. The conduit receiving portion has an internal thread 111 for engaging the external thread 106 of conduit section 102. Junction 108 includes a lid (not shown but equivalent to that indicated at 16 in Figure 1). A seal (not shown) attached to the lid engages upper surface 112 of the body of junction 108 and has projections 114 which include threaded apertures 116 that receive bolts that clamp the lid into place on the body of junction 108 thereby forming a hollow enclosure. The junction 108 includes an earthing connector that is not shown in Figure 2 or 2a but is described in more detail in connection with Figure 3 below.

In the embodiment shown in Figure 2, a single conduit receiving portion is shown. However, further conduit receiving portions, equivalent to 110, may be included thereby forming straight-through connections, angle connections, T-junctions and cross-junctions and the like.

The conduit system 100 also includes sealing means 118 to seal the joint between the conduit section 102 and the junction 108. The sealing means 118 includes an abutment member 120 and a compressible seal, in the form of O-ring 122. The abutment member 120 includes an internal threaded portion 124 that is sized to engage thread 106 of conduit section 102. The abutment member 120 also includes a first surface 126 that includes a recess 128 that receives the O-ring 122. A second surface 130 is perpendicular to the first surface 128. The sealing means 118 works in conjunction with an end surface 132 of conduit receiving portion 110. The second surface 130 is sized to extend over the outer surface of conduit receiving portion 110.

In use, the abutment member 120 is threaded on to external thread 106 of conduit section 102. The O-ring 122 is either engaged with the recess 128 and is therefore also threaded on to the conduit section 102 with abutment member 120 or is slid over the end portion 104 of conduit section 102 when the abutment member is in place. The abutment member 120 is threaded all the way to the end of thread 106 so as to be locked in firm engagement with conduit section 102. The conduit section 102 and sealing means 118 are then threaded on to internal thread 111 of conduit receiving portion 110 of junction 108. As end surface 132 of conduit receiving portion 110 nears the sealing means 118, it is able to pass under the second surface 130 of abutment member 120 and the end surface 132 can engage O-ring 122. The O-ring 122 is also engaged, on its opposite side, with first surface 126 of abutment member 120 and as the conduit section 102 is further threaded on to conduit receiving portion 110 the opposing surfaces 132 and 126 cause compression of the O-ring 122. The second surface 130 limits the outward radial movement of the O-ring 122 thereby forcing inward radial movement and causing the O-ring to seal against the threaded end portion 104 of conduit section 102.

Referring to Figure 3, in which parts equivalent to those shown in Figure 2 have been labelled with like reference numerals increased by 100, the conduit system 200 has a conduit section 202 and junction 208. An earth connector 234 can be seen in Figure 3 which is simply a small raised portion of the base of the junction 108 that includes a threaded aperture and locking nut around which an exposed earth wire can be wound and held in electrical contact with the exposed metal surface of junction 208.

In this embodiment, the junction 208 differs from that shown in Figures 2 and 2a since it includes an abutment portion 234 that extends slightly inwards from the threaded portion 211 of conduit receiving portion 210 thereby slightly narrowing the inlet from the conduit receiving portion 210 to the body of junction 108. The abutment portion 234 has an abutment surface 236 that engages O-ring 222, which in use is inserted into the conduit receiving portion 210. This insertion may take place onsite or the O-ring may be included in the manufacture of the junction.

In use the conduit section 202 is threaded on to internal thread 211 so that end surface 238 of conduit section 202 engages O-ring 222. In order to ensure proper engagement of the end surface 238 of conduit section 202 with O-ring 222 it is necessary that the externally threaded end portion 204 has a longer thread than the internal thread 211. When end surface 238 and abutment surface 236 engage O-ring 222 and compress it, the O-ring is caused to expand radially outwards thereby sealing the conduit section 202 relative to junction 208. In order to encourage radially outward movement of the O-ring 222, either one or both of the surfaces 236 and 238 may be angled to encourage that radially outward movement. In the case of abutment surface 236 this would involve angling the surface so that the innermost edge of abutment surface 236 is closest to the external end of conduit receiving portion 210. In the case of end surface 238 of conduit surface 202, this would involve angling the surface 238 so that the radially innermost portion of surface 238 extends furthest out of the conduit section 202.

It will be appreciated by persons skilled in the art that the above embodiments have been described by way of example only, and not in any limitative sense, and that various alterations and modifications are possible without departure from the scope of the invention as defined by the appended claims.

## Claims

1. A conduit system comprising:-
at least one section of conduit (102) having at least one cylindrical tubular portion including an end portion (104) having at least one first threaded portion (106);
at least one junction (108) for connecting at least one said section of conduit to another part of the conduit system, the junction having a hollow body and at least one conduit receiving portion (110) located outside said hollow body and having at least one second threaded portion (111) for engaging the first threaded portion; and
sealing means (118) for sealing the joint between the conduit and the junction, the sealing means comprising:
an abutment member (120) having a third threaded portion for engaging the first threaded portion,
at least one compressible seal for sealing the conduit relative to the junction,
**characterised in that** a first surface (126) of the abutment member and an end surface (132) of the conduit receiving portion of the junction are adapted to engage opposing sides of the compressible seal and apply pressure to the compressible seal thereby sealing the conduit relative to the junction.

2. A conduit system according to claim 1, wherein said abutment member (120) further comprises a second surface (130) perpendicular to the first surface (126) and adapted to engage the compressible seal (122) when it is under compression thereby limiting it from moving in a radially outwards direction.

3. A conduit system according to claim 1 or 2, wherein said abutment member (120) further comprises a recess (128) in said first surface (126) adapted to receive said compressible seal (122).

4. A conduit system according to any one of the preceding claims, wherein said compressible seal (122) comprises an O-ring.

## Patentansprüche

1. Leitungssystem, das Folgendes umfasst:
wenigstens eine Leitungssektion (102) mit wenigstens einem zylindrischen tubulären Abschnitt einschließlich eines Endabschnitts (104) mit wenigstens einem ersten Gewindeabschnitt (106);
wenigstens eine Anschlussstelle (108) zum Verbinden wenigstens einer genannten Leitungssektion mit einem anderen Teil des Leitungssystems, wobei die Anschlussstelle einen hohlen Körper und wenigstens einen Leitungsaufnahmeabschnitt (110) hat, der sich außerhalb des genannten hohlen Körpers befindet und wenigstens einen zweiten Gewindeabschnitt (111) für den Eingriff in den ersten Gewindeabschnitt hat; und
Dichtungsmittel (118) zum Abdichten der Fuge zwischen der Leitung und der Anschlussstelle, wobei das Dichtungsmittel Folgendes umfasst:
ein Widerlagerelement (120) mit einem dritten Gewindeabschnitt für den Eingriff in den ersten Gewindeabschnitt,
wenigstens eine komprimierbare Dichtung zum Abdichten der Leitung relativ zur Anschlussstelle,
**dadurch gekennzeichnet, dass** eine erste Oberfläche (126) des Widerlagerelements und eine Endfläche (132) des Leitungsaufnahmeabschnitts der Anschlussstelle so gestaltet sind, dass sie in gegenüberliegende Seiten der komprimierbaren Dichtung eingreifen und Druck auf die komprimierbare Dichtung ausüben, um dadurch die Leitung relativ zur Anschlussstelle abzudichten.

2. Leitungssystem nach Anspruch 1, wobei das genannte Widerlagerelement (120) ferner eine zweite Oberfläche (130) lotrecht zur ersten Oberfläche (126) aufweist, die so gestaltet ist, dass sie in die komprimierbare Dichtung (122) eingreift, wenn sie unter Kompression ist, um dadurch ihre Bewegung in einer radial auswärtigen Richtung zu begrenzen.

3. Leitungssystem nach Anspruch 1 oder 2, wobei das genannte Widerlagerelement (120) ferner eine Aussparung (128) in der genannten ersten Oberfläche (126) hat, die zum Aufnehmen der genannten komprimierbaren Dichtung (122) gestaltet ist.

4. Leitungssystem nach einem der vorherigen Ansprüche, wobei die genannte komprimierbare Dichtung (122) einen O-Ring umfasst.

## Revendications

1. Système de conduit comprenant :-
au moins une section de conduit (102) ayant au moins une partie tubulaire cylindrique incluant une partie d'extrémité (104) ayant au moins une première partie filetée (106) ;
au moins une jonction (108) pour relier au moins une dite section de conduit à une autre partie du système de conduit, la jonction ayant un corps creux et au moins une partie de réception du conduit (110) située à l'extérieur dudit corps creux et ayant au moins une seconde partie filetée (111) pour mettre en prise la première partie filetée ; et
des moyens de scellement (118) pour sceller le joint entre le conduit et la jonction, les moyens de scellement comprenant :
un élément de butée (120) ayant une troisième partie filetée pour mettre en prise la première partie filetée,
au moins un joint d'étanchéité compressible pour sceller le conduit par rapport à la jonction,
**caractérisé en ce qu'**une première surface (126) de l'élément de butée et une surface d'extrémité (132) de la partie de réception du conduit de la jonction sont adaptées pour mettre en prise des côtés opposés du joint d'étanchéité compressible et exercer une pression sur le joint d'étanchéité compressible scellant ainsi le conduit par rapport à la jonction.

2. Système de conduit selon la revendication 1, où ledit élément de butée (120) comprend en outre une seconde surface (130) perpendiculaire à la première surface (126) et adaptée pour mettre en prise le joint d'étanchéité compressible (122) lorsqu'il subit une compression, l'empêchant ainsi de se déplacer dans une direction radialement vers l'extérieur.

3. Système de conduit selon la revendication 1 ou 2, où ledit élément de butée (120) comprend en outre un retrait (128) dans ladite première surface (126) adapté pour recevoir ledit joint d'étanchéité compressible (122).

4. Système de conduit selon une quelconque des revendications précédentes, où ledit joint d'étanchéité compressible (122) comprend un joint torique.
